# EUROPEAN PATENT SPECIFICATION

(11) **EP 4 109 003 B1**
(45) Date of publication and mention of the grant of the patent: **13.08.2025**
(21) Application number: 22179893.7
(22) Date of filing: 20.06.2022
(51) Int. Cl.: F24F 7/06, F24F 11/00, F24F 13/02, E02B 11/00, E02D 31/00

(54) **SYSTEM AND METHOD FOR REMOVING RADON FROM A DRAINAGE SYSTEM**
SYSTEM UND VERFAHREN ZUR ENTFERNUNG VON RADON AUS EINEM ENTWÄSSERUNGSSYSTEM
SYSTÈME ET PROCÉDÉ POUR L'ÉLIMINATION DU RADON D'UN SYSTÈME DE DRAINAGE

(30) Priority: 21.06.2021 DK PA202100655
(43) Date of publication of application: 28.12.2022
(73) Proprietor: Joraja ApS, 2600 Glostrup (DK)
(72) Inventor: Thisted Møllebæk, Skipper, 2600 Glostrup (DK)
(74) Representative: Andreasen, Søren Laursen Vasegaard

(56) References cited:
- KR-B1- 101 027 076
- US-A- 4 957 394
- US-A- 5 101 712
- US-A- 5 551 797
- US-A1- 2006 207 430
- US-A1- 2011 212 680

## Description

### Field of invention

The present invention relates to a system for removing radon from a drainage system that comprises a number of drainage pipes arranged under a building, wherein the drainage pipes are in fluid communication with a collecting well. The invention also relates to a method for removing radon from a drainage system that comprises a number of drainage pipes arranged under a building, wherein the drainage pipes are in fluid communication with a collecting well.

### Prior art

It is known that radon is a cancer causing radioactive gas. Radon comes from the decay of uranium found in igneous rock, soil and water. It has been documented that exposure to radon gas introduces an increased risk of lung cancer. Unfortunately, radon has no smell or taste. Accordingly, in practice it is impossible to detect the presence of radon without conducting a radon specific test. Since radon has a higher density than air, the presence of radon is in particular a problem in lower levels of building and work environments.

Radon can enter buildings through cracks and other openings in the lowest levels of the building being arranged in contact with or in close proximity to soil, rock or ground water. In some buildings, a ground water collection system is installed to hold rain and standing water. These ground water collection systems collect water from around and under the building foundation using a system that comprises drainage pipes.

It is known to remove radon from building structures by venting with an exhaust fan and hereby actively depressurise the ground areas surrounding the building structure. This approach is, however, not suitable and practical in many situations. When a ventilator is arranged inside the building structure or close thereto, significant noise inside the building is a problem.

Many alternative prior art solutions are, however, expensive and complex and require that substantive constructional amendments are made. Accordingly, the typical prior art solutions cannot be retrofit to existing systems.

Some systems comprise a collecting wellarranged inside the building. US 2016/0214871 discloses a method for removing radon in such a system. However, these systems are associated with a leakage risk that potentially can contaminate the building.

US 5101712 A anticipates the features of preamble of the independent claims, and discloses a HVAC system connected to a vent pipe, wherein soil gas pressure below a building structure is reduced by establishing a suction point in proximity to a penetration of an existing sub-slab refrigerant line chase of the HVAC system and placing the same in communication with the chase. The chase is then sealed except for passage of the refrigerant lines or other internal conduits and an air pump connected to the vent pipe is connected outside the structure at the exit port of the chase to exhaust soil gas, including radon, from the suction point to the outside of the structure through the sealed chase line. This solution is, however, not suitable for draining away water to keep a ground water level lower than the level of the drainage system below the building. Accordingly, it would be desirable to have an alternative solution suitable of draining away water and radon-containing air and removing radon-containing air from the subsoil.

US 4957394 A discloses a radon collecting system that removes radon-containing air from the soil proximate a basement. This solution is, however, not suitable of at the same time draining away water by using gravity to keep a ground water level lower than the level of the drainage system and removing radon-containing air via drainage pipes. Moreover, the solution requires a visible upright pipe extending from below the floor into the basement and further out through an outer wall. Accordingly, it would be desirable to avoid said upright pipe and have an alternative solution suitable of at the same time draining away water by using gravity to keep a ground water level lower than the level of the drainage system and removing radon-containing air via drainage pipes.

US5551797A discloses a method of retrofitting an underground water drainage sump system below a floor slab for protecting the floor slab. The method comprises the steps of forming a sump hole to extend through a floor slab and into underground below the floor slab; forming a plurality of lateral passageways in the underground below the floor slab so as to extend outwardly from said sump hole along and below the floor slab to the vicinity of an outer perimeter of the floor slab; inserting a plurality of perforated hollow collection pipes into the lateral passageways such that outer ends of said collection pipes extend to the vicinity of the outer perimeter of the floor slab and inner ends of said collection pipes are disposed in flow communication with said sump hole; and placing a sump pump into said sump hole for pumping from said sump hole drainage water discharged into said sump hole from said collection pipes. When using instead of a sump pump a vacuum or exhaust fan, the operation of the vacuum or exhaust fan produces a condition of sub-slab depressurization below the floor slab which causes the removal of the polluting gases through the system, preventing the gases from entering the building.

Accordingly, it would be an advantage to be able to provide an alternative solution.

It is an object of the present invention to provide a system that is suitable for being retrofit to an existing drainage system that comprises a number of drainage pipes arranged under a building providing removal of toxic gases. It is also an object to provide a method, for the same purpose.

### Summary of the invention

The object of the present invention can be achieved by a system as defined in claim 1 and by a method as defined in claim 8. Preferred embodiments are defined in the dependent subclaims, explained in the following description and illustrated in the accompanying drawings.

The system according to the invention is a system for removing radon from a drainage system, wherein the system comprises a building and a drainage system that comprises a ventilator, a collecting well and at least one drainage pipe installed under a building, wherein the collecting well is configured for being installed outside the building, wherein the drainage pipes are in fluid communication with the collecting well, wherein the collecting well is arranged outside the building, wherein a ventilator is provided in the collecting well, wherein the ventilator is connected to the drainage pipe that extends into the collecting well, wherein said drainage pipes incline into the collecting well to ensure that:
- water collected by the drainage system is guided into the collecting well via the drainage pipe and
- water and radon flow through the drainage pipe into the collecting well.

Hereby, it is possible to provide a system that is suitable for being retrofit to existing drainage system that comprises a number of drainage pipes arranged under a building.

According to the invention, the term "the ventilator is provided in the collecting well" means that the ventilator is present in the collecting well.

The system is configured to remove radon from a drainage system that comprises a number of drainage pipes arranged under a building, wherein the drainage pipes are in fluid communication with a collecting well.

Some buildings are equipped with a drainage system comprising drainage pipes arranged under a building, wherein the drainage pipes are arranged and configured to guide water into a collecting well that is arranged outside the building.

It is known to install a ventilator outside the collecting well and connect the ventilator to a drainage pipe that extends into the collecting well. Hereby, the ventilator can depressurize the ground areas under the building and remove radon from the ground area under the building.

According to the invention, the ventilator is installed into the collecting well. one embodiment, the ventilator comprises an electrical motor.

It may be an advantage that the ventilator comprises or is controlled by a regulation unit that is configured to regulate the speed of the ventilator. In one embodiment, the ventilator is designed as an exhaust fan.

In one embodiment, the ventilator is connected to a guide pipe that is protruding from the collection well and has a distal portion provided outside the building. Hereby, it is possible to guide away the radon-containing air through the guide pipe so that the air is released in a sufficiently large distance from the building. Moreover, noise generated by the ventilator is reduced.

In one embodiment, the ventilator is connected to a drainage pipe that extends into the collecting well, wherein the ventilator is connected to said drainage pipe by means of a T-branch joint for pipes. Hereby, it is possible to drain water from the drainage pipe into the collecting well by means of the T-branch and at the same time use the T-branch to guide away radon-containing air from at least one drainage pipe.

According to the invention, the drainage pipe extends into the collecting well and said ventilator is placed in said collection well.

In one embodiment, the T-branch is arranged in such a manner that one pipe portion of the T-branch extends downwardly towards a bottom of the collecting well, whereas another pipe portion of the T-branch extends upwardly towards an open end of the collecting well. Hereby, it is possible guide water from the drainage system downwards into the collecting well and guide away radon-containing air from the drainage system via the upwardly extending pipe portion of the T-branch.

In one embodiment, the guide pipe extends through a side wall of the collecting well. Hereby, it is possible to cover the collecting well with a cover without a hole for a through-going pipe.

In one embodiment, the system comprises at least one detection unit arranged and configured to detect the radon concentration in one or more predefined positions, wherein the system comprises a regulation unit configured to regulate the activity of the ventilator on the basis of the detections made by the detection unit. Hereby, it is possible to minimise the energy consumption of the ventilator.

In one embodiment, the system comprises one or more detection units arranged inside the building, wherein the one or more detection units are configured to detect the radon concentration.

In one embodiment, the regulation unit is configured to control the ventilator in such a matter that the ventilator provides an intermittent ventilation.

In one embodiment, the regulation unit is configured to control the ventilator in such a matter that the ventilator provides a continuous ventilation.

In one embodiment, the regulation unit is arranged inside the building. In one embodiment, the building comprises a basement, wherein the regulation unit is arranged inside the basement of the building.

In one embodiment, the distance between the collecting well and the distal portion of the guide pipe is at least 1 meter. Hereby, it is possible to guide the radon-containing air away from the collecting well and further away from the building.

In one embodiment, the distance between the collecting well and the distal portion of the guide pipe is at least 2 meters.

In one embodiment, the distance between the collecting well and the distal portion of the guide pipe is at least 4 meters.

The method according to the invention is a method for removing radon from an existing drainage system that comprises a ventilator, a collecting well and a number of drainage pipes arranged under a building, wherein the drainage pipes are connected to a collecting well, wherein the method comprises the step of evacuating radon-containing air from the drainage system into the collecting well, wherein the collecting well is arranged outside the building, wherein the ventilator is arranged inside the collecting well and configured to:
- receive radon-containing air through the drainage pipe and
- guide away the radon-containing air through the guide pipe,
wherein said drainage pipes (6) incline into the collecting well (8) to ensure that:
- water (22) collected by the drainage system is guided into the collecting well (8) via the drainage pipe (6) and
- water (22) and radon (4) flows through the drainage pipe (6) into the collecting well (8).

Hereby, it is possible to provide a method by which it is possible to update a drainage system that comprises at least one drainage pipe arranged under a building.

According to the invention, in order to evacuate the radon-containing gas, the method comprises the step of applying a ventilator arranged in the collecting well,
wherein the ventilator is connected to a drainage pipe that extends into the collecting well, wherein the ventilator is further connected to a guide pipe, which protruding from the collection well and has a distal portion provided outside the building.

Hereby, it is possible to guide away the radon-containing air through the guide pipe so that the air is released in a sufficiently large distance from the building. Other undesirable gasses or particles can be guided away through the guide pipe and released in a sufficiently large distance from the building. Moreover, noise generated by the ventilator is reduced.

In an embodiment, the method comprises the step of retrofitting an existing drainage system that comprises at least one drainage pipe arranged under a building, wherein the drainage pipes are in fluid communication with a collecting well.

Hereby, it is possible to update existing drainage systems so that radon-containing air can be evacuated from the drainage system.

In an embodiment, the method comprises the step of applying a ventilator that is connected to the drainage pipe by means of a T-branch joint for pipes, wherein the drainage pipe extends into the collecting well, wherein the T-branch is arranged in such a manner that one pipe portion of the T-branch extends downwardly towards the bottom of the collecting well, whereas another pipe portion of the T-branch extends upwardly towards the open end of the collecting well. Hereby, it is possible guide water from the drainage downwards into the collecting well and guide away radon-containing air from the drainage system via the upwardly extending pipe portion of the T-branch.

In one embodiment, the method comprises the following steps of:
- detecting the radon concentration in one or more positions and
- regulating the activity of the ventilator on the basis of the detected radon concentration.

Hereby, it is possible to minimise the energy consumption of the ventilator.

In one embodiment, the method comprises the step of detecting the radon concentration in one or more positions inside the building by using one or more detection units arranged inside the building, wherein the one or more detection units are configured to detect the radon concentration.

In one embodiment, the method comprises the following steps of guiding the radon-containing air from the drainage system to the collecting well and further guiding the radon-containing air from the collection well away from the collection well via a guide pipe protruding from the collection well, wherein the distal portion of the guide pipe is provided outside the building. Hereby, it is possible to evacuate the radon-containing air in a larger distance from the building.

In one embodiment, the distance between the collecting well and the distal portion of the guide pipe is at least 1 meter.

In one embodiment, the distance between the collecting well and the distal portion of the guide pipe is at least 2 meters.

In one embodiment, the distance between the collecting well and the distal portion of the guide pipe is at least 4 meters.

### Description of the Drawings

The invention will become more fully understood from the detailed description given herein below. The accompanying drawings are given by way of illustration only, and thus, they are not limitative of the present invention. In the accompanying drawings:
- Fig. 1: shows a schematic side view of a system according to the invention;
- Fig. 2: shows a schematic view of a building and a system as the one shown in Fig. 1;
- Fig. 3: shows a schematic view of another building and a system as the one shown in Fig. 1; the feature of the ventilator inside the collecting well 8 is omitted for simplicity;
- Fig. 4: shows a schematic view of a building and a system that basically corresponds to the one shown in Fig. 2 and
- Fig. 5: shows a schematic view of an even further building and a system.

### Detailed description of the invention

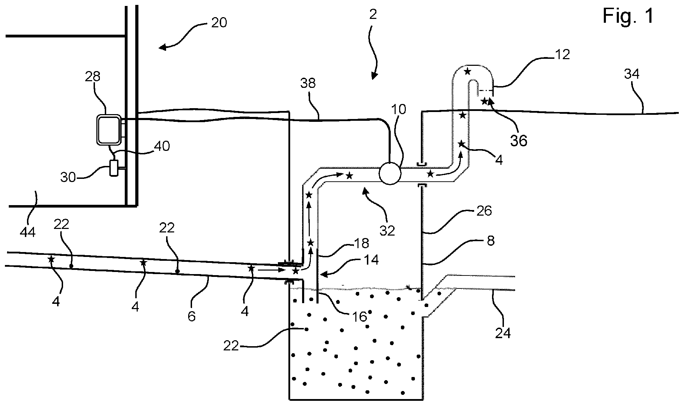

Referring now in detail to the drawings for the purpose of illustrating preferred embodiments of the present invention, a system 2 of the present invention is illustrated in Fig. 1.

Fig. 1 illustrates a schematic side view of a system 2 according to the invention. The system 2 is configured to remove radon 4 from a drainage system that comprises at least one drainage pipe 6 arranged under a building 20. The system 2 comprises a collecting well 8 arranged outside the building 20.

In one embodiment, the drainage system comprises a plurality of drainage pipes 6, wherein the drainage pipes 6 are in fluid communication with the collecting well 8. The collecting well 8 comprises an upper open end arranged at ground level. The ground 34 is indicated.

A major part of the collecting well 8 is arranged below ground level. The top portion of the collecting well 8, however, is arranged at ground level. A drainage pipe 6 extends through the wall 26 of the collecting well 8. The drainage pipe 6 inclines into the collecting well 8. Accordingly, water collected by the drainage system will be guided into the collecting well 8 via the drainage pipe 6. It can be seen that water 22 and radon 4 flow through the drainage pipe 6 into the collecting well 8.

The T-branch 14 comprises a first pipe portion 16 and a second pipe portion 18 extending in extension of the first pipe portion 16. The T-branch 14 is arranged in such a manner that the first pipe portion 16 of the T-branch 14 extends downwardly towards the bottom of the collecting well 8, whereas the second pipe portion 18 of the T-branch 14 extends upwardly towards the open end of the collecting well 8. Accordingly, water 22 from the drainage pipes 6 is guided via the first pipe portion 16 into the bottom of the collecting well 8. Moreover, air containing radon 4 is guided via the second pipe portion 18 into a pipe section 32 that is connected to the T-branch joint 14.

The collecting well 8 is arranged outside a building having a basement 44. A ventilator 10 is provided in the collecting well 8. The ventilator 10 is connected to the drainage pipe 6 by means of a T-branch joint 14 for pipes. The drainage pipe 6 extends into the collecting well 8. The ventilator 10 is connected to the pipe section 32 that is connected to the T-branch joint 14.

A pipe structure 24 is connected to the lower portion of the collecting well 8 and protrudes therefrom. It can be seen that the pipe structure 24 inclines away from the collecting well 8. Hereby, excess water can be guided away from the collecting well 8 via the pipe structure 24.

The system 2 comprises a guide pipe 12 that extends through a side wall 26 of the collecting well 8. The guide pipe 12 is configured to guide away radon 4 from the collecting well 8. Accordingly, it is possible to guide away the radon-containing air 4 through the guide pipe 12 so that the radon-containing air 4 is released in a sufficiently large distance from the building and that noise (hearable from the building) generated by the ventilator 10 can be reduced.

The system 2 comprises a detection unit 30 arranged and configured to detect the radon concentration in the basement 44 of the building 20. The system 2 comprises a regulation unit 28 configured to regulate the activity of the ventilator 10 on the basis of the detections made by the detection unit 30. The detection unit 30 is arranged in the basement 44. The regulation unit 28 is also arranged in the basement 44 of the building 20. The detection unit 30 is connected to the regulation unit 28 by means of a wired connection 40 (e.g. cable). In an alternative embodiment, the wired connection 40 may be replaced by a wireless connection that comprises a wireless transmitter connected to the detection unit 30 and a wireless receiver connected to the regulation unit 28.

The detection unit 30 can be arranged in another location than the one shown in Fig. 1. In one embodiment, the detection unit 30 is arranged in another location of the building or in a position, in which it is desirable to detect the radon concentration.

The regulation unit 28 is connected to the ventilator 10 by means of a wired connection 38 (e.g. cable). In an alternative embodiment, the wired connection 38 is be replaced by a wireless connection that comprises a wireless transmitter connected to the regulation unit 28 and a wireless receiver connected to the ventilator 10.

In one embodiment, the regulation unit 28 is integrated in the ventilator 10. In one embodiment, the regulation unit 28 is a frequency converted arrange configured to control the speed of an electrical motor of the ventilator 10.

The distal portion 36 of the guide pipe 12 is arranged in a distance from the collecting well 8 in order to ensure that the radon-containing air 4 is released in a distance from the collecting well 8. Hereby, it is possible to guide the radon-containing air 4 away from the collecting well 8 and further away from the building.

The end portion of the guide pipe 12 is shaped as a bend (U-shaped) structure, wherein the distal portion 36 of the guide pipe 12 extends downwardly. Hereby, it is possible to avoid rain and other types of precipitation.

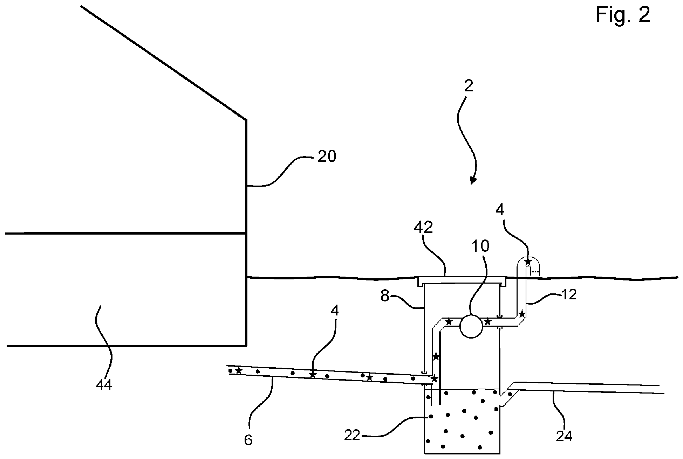

Fig. 2 illustrates a schematic view of a building 20 and a system 2 shown in Fig. 1. The system 2 basically corresponds to the one shown in Fig. 1. The detection unit and regulation unit shown in Fig.1 are, however, not shown in Fig. 2. It can be seen that the collecting well 8 comprises a cover 42 covering the open end of the collecting well 8. The collecting well 8 is arranged in a distance from the building 20. Water 22 and radon-containing air 4 from a drainage system that comprises at least one drainage pipe 6 arranged under the building 20 are guided into the collecting well 8. The building 20 comprises a basement 44.

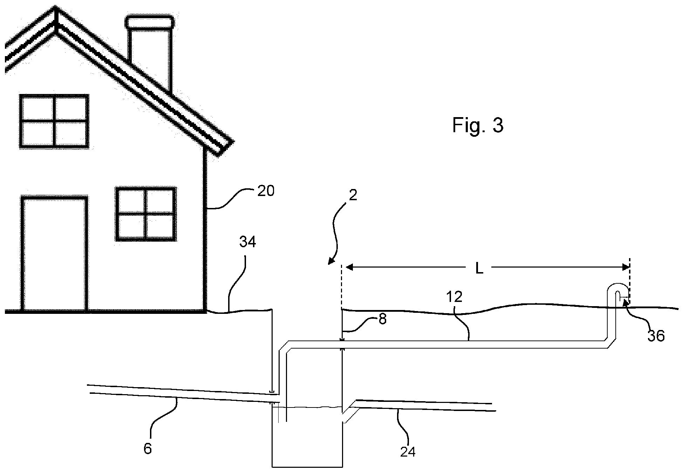

Fig. 3 illustrates a further simplified schematic view of another building 20 and a system 2 shown in Fig. 2. The distal end 36 of the guide pipe 12 is arranged in larger distance L from the collecting well 8 than in Fig. 1 and Fig. 2. The distance L may be selected in such a manner that the guide pipe 12 can guide away the radon-containing air 4 through the guide pipe 12 so that the radon-containing air 4 is released in a sufficiently large distance L from the building 20. A positive side effect is that, the noise (generated by the ventilator 10, not shown in Fig. 3 for simplicity) that is hearable inside or in proximity to the building 20 is reduced.

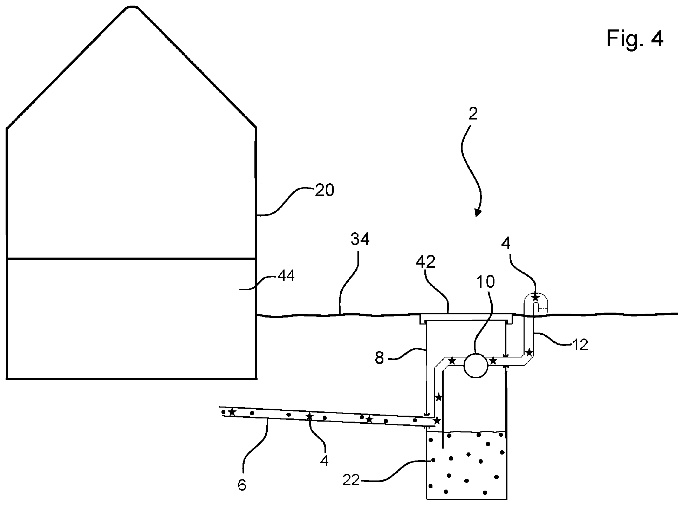

Fig. 4 illustrates a schematic view of a building 20 and a system 2 according to the invention that basically corresponds to the one shown in Fig. 2. The collecting well 8 comprises no pipe structure for guiding away excess water from the collecting well 8. This embodiment may be realised when the collecting well 8 has a large capacity (volume) or when the collecting well 8 is equipped with an alternative member configured to guide away excess water from the collecting well 8. The building 20 comprises a basement 44.

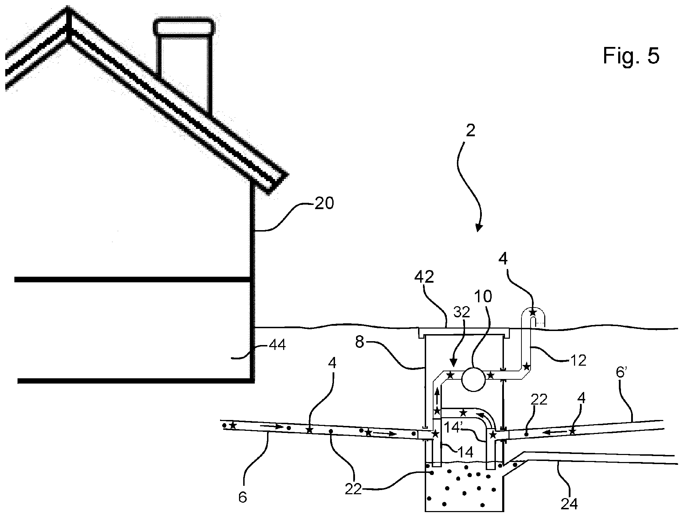

Fig. 5 illustrates a schematic view of an even further building 20 and a system 2. The system 2 comprises the same elements as the one shown in Fig. 2. The system 2 furthermore comprises an additional drainage pipe 6' that is attached to a T-branch joint 14' arranged inside the collection well 8. The T-branch joint 14' is connected to the pipe section 32. Hereby, the system 2 is configured to receive water 22 and radon-containing air 4 from both the first drainage pipe 6 and the additional drainage pipe 6'. The system 2 is configured to and guide away the radon-containing air 4 from both first drainage pipe 6 and the additional drainage pipe 6' via the pipe section 32 and further via the guide pipe 12. The building 20 comprises a basement 44.

The system and method according to the invention can both drain away water and radon-containing air.

### List of reference numerals

- 2: System
- 4: Radon
- 6, 6': Drainage pipe
- 8: Collecting well
- 10: Ventilator
- 12: Guide pipe
- 14: T-branch joint (for pipes)
- 16: Pipe portion
- 18: Pipe portion
- 20: Building
- 22: Water
- 24: Pipe structure
- 26: Wall
- 28: Regulation unit
- 30: Detection unit
- 32: Pipe section
- 34: Ground
- 36: Distal end
- 38: Connection
- 40: Cable
- 42: Cover
- 44: Basement
- L: Distance

## Claims

1. System (2) for removing radon (4) from a drainage system, wherein the system (2) comprises a building (20) and a drainage system that comprises:
- a ventilator (10);
- a collecting well (8) and
- a number of drainage pipes (6) configured for being arranged under a building, wherein the drainage pipes (6) are arranged under the building (20), wherein the collecting well (8) is configured for being installed outside the building,and is arranged outside the building (20), and wherein the number of drainage pipes (6) are in fluid communication with the collecting well (8),
**, characterised in that** the ventilator (10) is provided in the collecting well (8), wherein the ventilator (10) is connected to one drainage pipe (6) that extends into the collecting well (8), wherein said drainage pipe (6) inclines into the collecting well (8) to ensure that:
- water (22) collected by the drainage system is guided into the collecting well (8) via the drainage pipe (6) and
- water (22) and radon (4) flow through the drainage pipe (6) into the collecting well (8).

2. System (2) according to claim 1, wherein the ventilator (10) is connected to a guide pipe (12) that is protruding from the collection well (8) and has a distal portion provided outside the building (20).

3. System (2) according to one of the preceding claims, wherein the ventilator (10) is connected to the drainage pipe (6) that extends into the collecting well (8) by means of a T-branch joint (14) for pipes.

4. System (2) according to claim 3, wherein the T-branch (14) is arranged in such a manner that one pipe portion (16) of the T-branch (14) extends downwardly towards a bottom of the collecting well (8), whereas another pipe portion (18) of the T-branch (14) extends upwardly towards an open end of the collecting well (8).

5. System (2) according to one of the claims 2-4, wherein the guide pipe (12) extends through a side wall (26) of the collecting well (8).

6. System (2) according to one of the claims 2-4, wherein the system (2) comprises a detection unit (30) arranged and configured to detect the radon concentration in a predefined position, wherein the system (2) comprises a regulation unit (28) configured to regulate the activity of the ventilator (10) on the basis of the detections made by the detection unit (30).

7. System (2) according to one of the preceding claims, wherein the distance between the collecting well (8) and the distal portion of the guide pipe (12) is at least 1 meter.

8. A method for removing radon (4) from an existing drainage system of a building (20), the drainage system comprising:
- a ventilator (19);
- a guide pipe (12);
- a collecting well (8) arranged outside the building (20);
- a number of drainage pipes (6) arranged under the building (20) and in fluid communication with the collecting well (8), wherein the method comprises the step of evacuating radon-containing air (4) from the drainage system into the collecting well (8) and via the guide pipe (12) by
**characterised in that**
the method comprises the step of applying the ventilator (10) to be arranged into the collecting well (8) and configured to:
- receive radon-containing air (4) through one drainage pipe (6) that extends into the collecting well (8) and
- guide away the radon-containing air (4) through the guide pipe (12),
wherein said drainage pipe (6) inclines into the collecting well (8) to ensure that:
- water (22) collected by the drainage system is guided into the collecting well (8) via the drainage pipe (6) and
- water (22) and radon (4) flows through the drainage pipe 6 into the collecting well (8)

9. A method according to claim (8),
wherein the ventilator (10) is connected to the drainage pipe (6) that extends into the collecting well (8),
wherein the ventilator (10) is further connected to the guide pipe (12),
wherein the guide pipe (12) is protruding from the collecting well (8) and has a distal portion provided outside the building (20).

10. A method according to one of the preceding claims 8 or 9, wherein the method comprises the following steps of:
- detecting the radon concentration in one or more positions and
- regulating the activity of the ventilator (10) on the basis of the detected radon concentration.

11. A method according to one of the preceding claims 8-10, wherein the method comprises the steps of guiding the radon-containing air (4) from the drainage system to the collecting well (8) and further guiding the radon-containing air (4) from the collection well (8) away from the collection well (8) via a guide pipe (12) protruding from the collection well (8), wherein the distal portion of the guide pipe (12) is provided outside the building (20).

12. A method according to one of the preceding claims 9-11, wherein the ventilator (10) is connected to the drainage pipe (6) by means of a T-branch joint (14) for pipes, wherein the drainage pipe (6) extends into the collecting well (8), wherein the T-branch (14) is arranged in such a manner that one pipe portion (16) of the T-branch (14) extends downwardly towards the bottom of the collecting well (8), whereas another pipe portion (18) of the T-branch (14) extends upwardly towards the open end of the collecting well (8).

## Patentansprüche

1. System (2) zum Entfernen von Radon (4) aus einem Entwässerungssystem, wobei das System (2) ein Gebäude (20) und ein Entwässerungssystem umfasst, das Folgendes umfasst:
- einen Ventilator (10);
- ein Sammelbecken (8) und
- eine Anzahl von Entwässerungsrohren (6), die konfiguriert sind, um unter einem Gebäude angeordnet zu werden, wobei die Entwässerungsrohre (6) unter dem Gebäude (20) angeordnet sind, wobei das Sammelbecken (8) zur Installation außerhalb des Gebäudes konfiguriert ist und außerhalb des Gebäudes (20) angeordnet ist, und wobei die Anzahl von Entwässerungsrohren (6) in strömungstechnischer Kommunikation mit dem Sammelbecken (8) stehen,
**dadurch gekennzeichnet, dass** der Ventilator (10) in dem Sammelbecken (8) bereitgestellt ist, wobei der Ventilator (10) mit einem Entwässerungsrohr (6) verbunden ist, das sich in das Sammelbecken (8) erstreckt, wobei das Entwässerungsrohr (6) in das Sammelbecken (8) geneigt ist, um sicherzustellen, dass:
- von dem Entwässerungssystem gesammeltes Wasser (22) über das Entwässerungsrohr (6) in das Sammelbecken (8) geleitet wird und
- Wasser (22) und Radon (4) durch das Entwässerungsrohr (6) in das Sammelbecken (8) fließen.

2. System (2) nach Anspruch 1, wobei der Ventilator (10) mit einem Führungsrohr (12) verbunden ist, das aus dem Sammelbecken (8) vorsteht und einen distalen Abschnitt aufweist, der außerhalb des Gebäudes (20) bereitgestellt ist.

3. System (2) nach einem der vorstehenden Ansprüche, wobei der Ventilator (10) mit dem Entwässerungsrohr (6), das sich in das Sammelbecken (8) erstreckt, mittels einer T-Abzweigmuffe (14) für Rohre verbunden ist.

4. System (2) nach Anspruch 3, wobei der T-Abzweig (14) so angeordnet ist, dass sich ein Rohrabschnitt (16) des T-Abzweigs (14) nach unten zu einem Boden des Sammelbeckens (8) hin erstreckt, während ein anderer Rohrabschnitt (18) des T-Abzweigs (14) sich nach oben zu einem offenen Ende des Sammelbeckens (8) hin erstreckt.

5. System (2) nach einem der Ansprüche 2-4, wobei sich das Führungsrohr (12) durch eine Seitenwand (26) des Sammelbeckens (8) erstreckt.

6. System (2) nach einem der Ansprüche 2-4, wobei das System (2) eine Erfassungseinheit (30) umfasst, die angeordnet und konfiguriert ist, um die Radonkonzentration in einer vordefinierten Position zu erfassen, wobei das System (2) eine Regulierungseinheit (28) umfasst, die konfiguriert ist, um die Aktivität des Ventilators (10) auf der Basis der von der Erfassungseinheit (30) vorgenommenen Erfassungen zu regulieren.

7. System (2) nach einem der vorstehenden Ansprüche, wobei der Abstand zwischen dem Sammelbecken (8) und dem distalen Abschnitt des Führungsrohrs (12) mindestens 1 Meter beträgt.

8. Verfahren zum Entfernen von Radon (4) aus einem bestehenden Entwässerungssystem eines Gebäudes (20), wobei das Entwässerungssystem Folgendes umfasst:
- einen Ventilator (19);
- ein Führungsrohr (12);
- ein Sammelbecken (8), das außerhalb des Gebäudes (20) angeordnet ist;
- eine Anzahl von Entwässerungsrohren (6), die unter dem Gebäude (20) und in strömungstechnischer Kommunikation mit dem Sammelbecken (8) angeordnet sind, wobei das Verfahren den Schritt des Ablassens von radonhaltiger Luft (4) aus dem Entwässerungssystem in das Sammelbecken (8) und über das Führungsrohr (12) umfasst durch
einen Ventilator (10), **dadurch gekennzeichnet, dass** das Verfahren den Schritt des Anwendens des Ventilators (10) umfasst, der in das Sammelbecken (8) angeordnet werden soll und konfiguriert ist, um:
- radonhaltige Luft (4) durch ein Entwässerungsrohr (6), das sich in das Sammelbecken (8) erstreckt, aufzunehmen und
- die radonhaltige Luft (4) durch das Führungsrohr (12) abzuleiten, wobei das Entwässerungsrohr (6) in das Sammelbecken (8) geneigt ist, um sicherzustellen, dass:
- von dem Entwässerungssystem gesammeltes Wasser (22) über das Entwässerungsrohr (6) in das Sammelbecken (8) geleitet wird und
- Wasser (22) und Radon (4) durch das Entwässerungsrohr 6 in das Sammelbecken (8) fließt

9. Verfahren nach Anspruch (8),
wobei der Ventilator (10) mit dem Entwässerungsrohr (6) verbunden ist, das sich in das Sammelbecken (8) erstreckt,
wobei der Ventilator (10) weiter mit dem Führungsrohr (12) verbunden ist,
wobei das Führungsrohr (12) aus dem Sammelbecken (8) vorsteht und einen distalen Abschnitt aufweist, der außerhalb des Gebäudes (20) bereitgestellt ist.

10. Verfahren nach einem der vorstehenden Ansprüche 8 oder 9, wobei das Verfahren die folgenden Schritte umfasst:
- Erfassen der Radonkonzentration in einer oder mehreren Positionen und
- Regulieren der Aktivität des Ventilators (10) auf der Basis der erfassten Radonkonzentration.

11. Verfahren nach einem der vorstehenden Ansprüche 8-10, wobei das Verfahren die Schritte des Leitens der radonhaltigen Luft (4) von dem Entwässerungssystem zu dem Sammelbecken (8) und weiter Leiten der radonhaltigen Luft (4) aus dem Sammelbecken (8) weg von dem Sammelbecken (8) über ein Führungsrohr (12), das aus dem Sammelbecken (8) vorsteht, umfasst, wobei der distale Abschnitt des Führungsrohrs (12) außerhalb des Gebäudes (20) bereitgestellt wird.

12. Verfahren nach einem der vorstehenden Ansprüche 9-11, wobei der Ventilator (10) mit dem Entwässerungsrohr (6) mittels einer T-Abzweigmuffe (14) für Rohre verbunden ist, wobei sich das Entwässerungsrohr (6) in das Sammelbecken (8) erstreckt, wobei der T-Abzweig (14) so angeordnet ist, dass sich ein Rohrabschnitt (16) des T-Abzweigs (14) nach unten zum Boden des Sammelbecken (8) hin erstreckt, während ein anderer Rohrabschnitt (18) des T-Abzweigs (14) sich nach oben zum offenen Ende des Sammelbeckens (8) hin erstreckt.

## Revendications

1. Système (2) pour éliminer le radon (4) d'un système de drainage, où le système (2) comprend un bâtiment (20) et un système de drainage qui comprend :
- un ventilateur (10) ;
- un puits collecteur (8) et
- un certain nombre de tuyaux de drainage (6) conçus pour être placés sous un bâtiment, les tuyaux de drainage (6) étant placés sous le bâtiment (20), le puits de collecte (8) étant conçu pour être installé à l'extérieur du bâtiment et étant placé à l'extérieur du bâtiment (20), et le nombre de tuyaux de drainage (6) étant en communication fluidique avec le puits de collecte (8),
**caractérisé en ce que** le ventilateur (10) est dans le puits collecteur (8), et le ventilateur (10) est relié à un tuyau de drainage (6) qui va dans le puits collecteur (8), et ledit tuyau de drainage (6) est incliné dans le puits collecteur (8) pour s'assurer que :
- l'eau (22) récupérée par le système de drainage est dirigée vers le puits collecteur (8) via le tuyau de drainage (6) et
- l'eau (22) et le radon (4) passent par le tuyau de drainage (6) pour aller dans le puits de collecte (8).

2. Système (2) selon la revendication 1, où le ventilateur (10) est relié à un tuyau de guidage (12) qui sort du puits de collecte (8) et a une partie distale à l'extérieur du bâtiment (20).

3. Système (2) selon l'une des revendications précédentes, où le ventilateur (10) est relié au tuyau de drainage (6) qui va dans le puits collecteur (8) grâce à un raccord en T (14) pour tuyaux.

4. Système (2) selon la revendication 3, où la branche en T (14) est placée de telle manière qu'une partie de tuyau (16) de la branche en T (14) va vers le bas vers le fond du puits de collecte (8), tandis qu'une autre partie de tuyau (18) de la branche en T (14) va vers le haut vers une extrémité ouverte du puits de collecte (8).

5. Système (2) selon l'une des revendications 2 à 4, où le tuyau de guidage (12) traverse une paroi latérale (26) du puits collecteur (8).

6. Système (2) selon l'une des revendications 2 à 4, où le système (2) a une unité de détection (30) qui est placée et configurée pour détecter la concentration de radon à un endroit prédéfini, et où le système (2) a une unité de régulation (28) qui est configurée pour réguler l'activité du ventilateur (10) en fonction des détections faites par l'unité de détection (30).

7. Système (2) selon l'une des revendications précédentes, où la distance entre le puits collecteur (8) et la partie distale du tuyau de guidage (12) est d'au moins 1 mètre.

8. Procédé pour éliminer le radon (4) d'un système de drainage existant d'un bâtiment (20), le système de drainage comprenant :
- un ventilateur (19) ;
- un tube guide (12) ;
- un puits collecteur (8) situé à l'extérieur du bâtiment (20) ;
- un certain nombre de tuyaux de drainage (6) placés sous le bâtiment (20) et en communication fluidique avec le puits collecteur (8), dans lequel le procédé comprend l'étape consistant à évacuer l'air contenant du radon (4) du système de drainage vers le puits collecteur (8) et via le tuyau de guidage (12) par
un ventilateur (10), le truc étant que le procédé comprend l'étape consistant à appliquer le ventilateur (10) à disposer dans le puits collecteur (8) et configuré pour :
- recevoir l'air contenant du radon (4) par un tuyau de drainage (6) qui va dans le puits collecteur (8) et
- diriger l'air contenant du radon (4) à travers le tuyau de guidage (12), le tuyau de drainage (6) étant incliné vers le puits collecteur (8) pour garantir que :
- l'eau (22) récupérée par le système de drainage est dirigée vers le puits collecteur (8) via le tuyau de drainage (6) et
- l'eau (22) et le radon (4) passent par le tuyau de drainage 6 pour aller dans le puits collecteur (8)

9. Procédé selon la revendication (8),
où le ventilateur (10) est relié au tuyau de drainage (6) qui va dans le puits collecteur (8),
où le ventilateur (10) est aussi relié au tuyau de guidage (12),
où le tuyau de guidage (12) sort du puits collecteur (8) et a une partie distale à l'extérieur du bâtiment (20).

10. Procédé selon l'une des revendications 8 ou 9 ci-dessus, où le procédé comprend les étapes suivantes :
- détecter la concentration de radon à un ou plusieurs endroits et
- réguler l'activité du ventilateur (10) en fonction de la concentration de radon détectée.

11. Procédé selon l'une des revendications 8 à 10 précédentes, dans lequel le procédé comprend les étapes consistant à guider l'air contenant du radon (4) depuis le système de drainage vers le puits de collecte (8) et à guider ensuite l'air contenant du radon (4) depuis le puits de collecte (8) loin du puits de collecte (8) via un tuyau de guidage (12) faisant saillie depuis le puits de collecte (8), la partie distale du tuyau de guidage (12) étant prévue à l'extérieur du bâtiment (20).

12. Procédé selon l'une des revendications 9 à 11 précédentes, dans lequel le ventilateur (10) est relié au tuyau de drainage (6) par un raccord en T (14) pour tuyaux, le tuyau de drainage (6) se prolongeant dans le puits collecteur (8), dans lequel le raccord en T (14) est disposé de telle manière qu'une partie de tuyau (16) du raccord en T (14) s'étend vers le bas en direction du fond du puits collecteur (8), tandis qu'une autre partie de tuyau (18) du raccord en T (14) s'étend vers le haut en direction de l'extrémité ouverte du puits collecteur (8).
